(19) Europäisches Patentamt / European Patent Office / Office européen des brevets

(11) **EP 4 629 323 A1**

(12) **EUROPEAN PATENT APPLICATION**
published in accordance with Art. 153(4) EPC

(43) Date of publication:
**08.10.2025 Bulletin 2025/41**

(21) Application number: **23933412.1**

(22) Date of filing: **19.04.2023**

(51) International Patent Classification (IPC):
***H01M 4/134*** *(2010.01)*

(52) Cooperative Patent Classification (CPC):
Y02E 60/10

(86) International application number:
**PCT/CN2023/089199**

(87) International publication number:
**WO 2024/216535 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited**
**Ningde, Fujian 352100 (CN)**

(72) Inventors:
• **YIN, Ziyi**
 **Ningde, Fujian 352100 (CN)**

• **WU, Longsheng**
 **Ningde, Fujian 352100 (CN)**
• **DONG, Miaomiao**
 **Ningde, Fujian 352100 (CN)**
• **JIN, Haizu**
 **Ningde, Fujian 352100 (CN)**
• **YE, Yonghuang**
 **Ningde, Fujian 352100 (CN)**
• **SUN, Xin**
 **Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54) **NEGATIVE ELECTRODE SHEET AND PREPARATION METHOD THEREFOR, SECONDARY BATTERY AND ELECTRIC DEVICE**

(57)    The present application relates to a negative electrode sheet and a preparation method therefor, a secondary battery and an electric device. The negative electrode sheet includes a negative electrode current collector, a negative electrode active layer and a flake graphite. A ratio of a thickness t to a diameter d of the flake graphite is t/d, where $t/d \geq 0.005$. The negative electrode active layer includes a negative electrode active material, and the negative electrode active material includes a silicon-based material. The substrate in the negative electrode sheet is not prone to damage.

FIG. 4

EP 4 629 323 A1

## Description

### TECHNICAL FIELD

The present application relates to the technical field of a lithium battery, and in particular to a negative electrode sheet and a preparation method therefor, a secondary battery and an electric device.

### BACKGROUND

In recent years, with the application rang of lithium-ion batteries expanding, lithium-ion batteries are widely used in various fields including energy storage power systems such as hydraulic, firepower, wind and solar power stations, electric power tools, electric bicycles, electric motorcycles, electric vehicles, military equipment, aerospace, etc.
A negative electrode active material of a conventional lithium-ion battery is mainly a carbon-based material, and then, a silicon-based material is developed with the continuous improvement of requirements on the energy density. However, a substrate close to a negative electrode active layer in the negative electrode sheet including the silicon-based material is prone to crack (generate a substrate crack), resulting in an increased failure risk of a battery cell due to the crack in a battery cycle process.

### SUMMARY

The present application is proposed in view of the above subject, and has the objective of providing a negative electrode sheet and a preparation method therefor, a secondary battery and an electric device. A substrate in the negative electrode sheet is not prone to damage, and the failure risk of a battery cell may be reduced.
According to a first aspect of the present application, a negative electrode sheet is provided, and includes a negative electrode current collector, a negative electrode active layer and a flake graphite. The negative electrode active layer includes a negative electrode active material. The negative electrode active material includes a silicon-based material. The negative electrode active layer is disposed on a surface of the negative electrode current collector. A ratio of a thickness t to a diameter d of the flake graphite is t/d, and t/d≥0.005. A distribution position of the flake graphite in the negative electrode sheet meets at least one of the following conditions (1) to (2):

(1) the flake graphite is mixed in the negative electrode active layer; and
(2) a flake graphite layer is formed between the negative electrode current collector and the negative electrode active layer.

According to the negative electrode sheet, the flake graphite having a specific t/d value is introduced into the negative electrode active layer or between the negative electrode active layer and the current collector, so that the damage of the silicon-based material to the substrate may be reduced, and the failure risk of the battery cell may be further reduced.
According to a second aspect of the present application, a method for preparing a negative electrode sheet is provided, and includes at least one of the following steps (1) to (2):

(1) mixing flake graphite with a negative electrode active material to prepare negative electrode active slurry, and coating the negative electrode active slurry onto a surface of a negative electrode current collector to form a negative electrode active layer; and
(2) preparing flake graphite slurry, coating the flake graphite slurry onto the surface of the negative electrode current collector to prepare a flake graphite layer including the flake graphite, and preparing a negative electrode active layer on a surface of the flake graphite layer.

In step (1) to step (2), the ratio of the thickness t to the diameter d of the flake graphite is t/d, and t/d≥0.005. The negative electrode active material includes a silicon-based material.
According to a third aspect of the present application, a secondary battery is provided, and includes the negative electrode sheet according to the first aspect or the negative electrode sheet prepared by the preparation method according to the second aspect.
According to a fourth aspect of the present application, an electric device is provided, and includes the secondary battery according to the third aspect.

### BRIEF DESCRIPTION OF THE DRAWINGS

FIG. 1 is an electron microscope photograph of a silicon-based material;

FIG. 2 is another electron microscope photograph of a silicon-based material;

FIG. 3 is a schematic electron microscope photograph diagram showing that a substrate is damaged;

FIG. 4 is a schematic structure diagram of a negative electrode sheet according to an example of the present application;

FIG. 5 is a schematic diagram of a secondary battery according to an embodiment of the present application;

FIG. 6 is an exploded view of a secondary battery according to an embodiment of the present application shown in FIG. 1;

FIG. 7 is a schematic diagram of a battery module according to an embodiment of the present application;

FIG. 8 is a schematic diagram of a battery pack according to an embodiment of the present application;

FIG. 9 is an exploded view of a battery pack according to an embodiment of the present application shown in FIG. 4; and

FIG. 10 is a schematic diagram of an electric device using a secondary battery as a power supply according to an embodiment of the present application.

Descriptions of reference numerals:

401 denotes a substrate (negative electrode current collector); 402 denotes a flake graphite layer; 403 denotes a negative electrode active layer;

1 denotes a battery pack; 2 denotes an upper box body; 3 denotes a lower box body; 4 denotes a battery module; 5 denotes a secondary battery; 51 denotes a case; 52 denotes an electrode assembly; 53 denotes a cover plate; and 6 denotes an electric device.

## DETAILED DESCRIPTION

The embodiments of a negative electrode sheet and a preparation method therefor, a secondary battery and an electric device of the present application are specifically illustrated and disclosed in detail with reference to the accompanying drawings properly hereafter. However, situations unnecessary to be illustrated in detail may be omitted. For example, situations of detailed illustrations of well-known matters and repeated illustrations of practically identical structures are omitted. The purpose is to avoid unnecessary lengthiness of the following illustrations and to provide convenience for those skilled in the art to understand. In addition, the accompanying drawings and subsequent illustrations are provided for those skilled in the art to fully understand the present application, and are not intended to limit the subject in the claims.

The "range" disclosed in the present application is defined in a form of lower and upper limits, a given range is defined by selecting a lower limit and an upper limit, and the selected lower limit and upper limit define the boundary of the particular range. The range defined in such a manner may include or exclude end values, and may be freely combined. That is, any one lower limit may be combined with any one upper limit to form a range. For example, if ranges of 60 to 120 and 80 to 110 are listed for a particular parameter, it is to be understood that ranges of 60 to 110 and 80 to 120 are also expected. In addition, if minimum range values 1 and 2 are listed, and if maximum range values 3, 4 and 5 are listed, all of the following ranges may be expected: 1 to 3, 1 to 4, 1 to 5, 2 to 3, 2 to 4, and 2 to 5. In the present application, unless otherwise specified, the numerical range "a to b" represents the abbreviated representation of any combination of real numbers between a to b, and both a and b are real numbers. For example, the numerical range "0 to 5" means that all real numbers between 0 and 5 are listed herein, and "0 to 5" is only the abbreviated representation of the combination of these numbers. In addition, when a parameter is expressed as an integer $\geq 2$, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application may be combined with each other to form new technical solutions.

Unless otherwise specified, all technical features and optional technical features of the present application may be combined with each other to form new technical solutions.

Unless otherwise specified, all steps in the present application may be performed in order or may be performed in a random order, and are preferably performed in order. For example, the expression that the method includes steps (a) and (b) means that the method may include steps (a) and (b) which are performed sequentially, or may include steps (b) and (a) which are performed sequentially. For example, the expression that the method may further include step (c) indicates that step (c) may be added to the method in any one order. For example, the method may include steps (a), (b) and (c), or may include steps (a), (c) and (b), or may include steps (c), (a) and (b), etc.

Unless otherwise specified, terms of "include" and "comprise" mentioned in the present application indicate open inclusion or closed inclusion. For example, the terms "include" and "comprise" may indicate that other components not listed may further be included or comprised, or only listed components may be included or comprised.

Unless otherwise specified, in the present application, the term "or" is inclusive. For example, the phrase "A or B" means "A, B, or both A and B". More specifically, any one of the following conditions meets the condition "A or B": A is true (or existing) and B is false (or not existing); A is false (or not existing) and B is true (or existing); or both A and B are true (or existing).

Unless otherwise specified, in the present application, the terms "on a surface" and "laminated on a surface" include the situations of direct contact or indirect contact. For example, "preparing a flake graphite layer on a surface of a negative electrode current collector" indicates that the flake graphite layer is in contact with the negative electrode current collector in one aspect, that is, the flake graphite layer is directly laminated onto the surface of the negative electrode current collector. On the other hand, it may also indicate that the flake graphite layer is not in direct contact with the negative electrode current collector. For example, a priming coat, etc. may be disposed between the flake graphite layer and the negative electrode current collector.

Unless otherwise specified, in the present application, the term "diameter" refers to a maximum linear dimension of a flake material, i.e., the maximum length of a two-dimensional plane of the flake material.

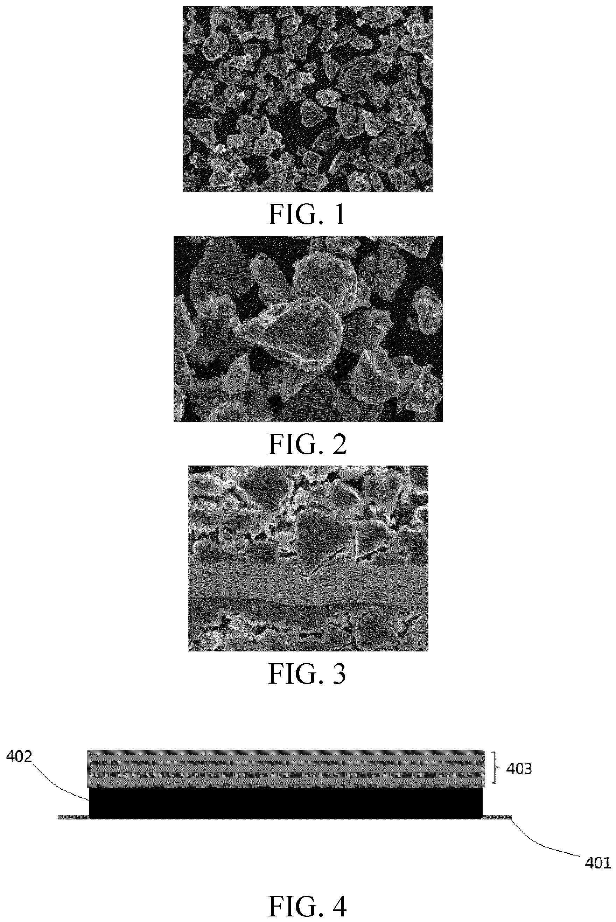

It is found through research that a crack of a substrate (which is generally a current collector) in a negative electrode sheet including a silicon-based material is generally formed in a process of the negative electrode sheet, for example, a cold pressing process, and then further worsens in a cyclic expansion process, to further cause aging of a battery cell. The reason may be as follows: as shown in FIG. 1 to FIG. 2 (surface topographies of two kinds of silicon-based materials are tested by using a scanning electron microscope) and Table 1, the silicon-based materials are generally particles with well-defined edges and corners and relatively high hardness (Mohs hardness, a surface of a tested ore is scribed with a pyramid-shaped diamond pin by using an indentation method, and the depth of a scratch is measured). Therefore, a substrate close to a negative electrode active material may be damaged in a working procedure such as cold pressing, as shown in FIG. 3.

Table 1

| Material | Mohs hardness |
|---|---|
| Silicon-oxygen material | 7 |
| Silicon-carbon material | 9.5 |
| Cu | 3.5 |

Based on this, some examples of the present application provide a negative electrode sheet including a negative electrode current collector, a negative electrode active layer and a flake graphite. The negative electrode active layer includes a negative electrode active material. The negative electrode active material includes a silicon-based material. The negative electrode active layer is disposed on a surface of the negative electrode current collector. A ratio of a thickness t to a diameter d of the flake graphite is t/d, and t/d≥0.005. A distribution position of the flake graphite in the negative electrode sheet meets at least one of the following conditions (1) to (2):

(1) the flake graphite is mixed in the negative electrode active layer; and
(2) a flake graphite layer is formed between the negative electrode current collector and the negative electrode active layer.

According to the negative electrode sheet, the flake graphite having a specific t/d value is introduced into the negative electrode active layer or between the negative electrode active layer and the current collector, so that the damage of the silicon-based material to the substrate may be reduced, and the failure risk of the battery cell may be further reduced.

Specifically, for the condition that the flake graphite is mixed in the negative electrode active layer, the flake graphite is directly mixed with the negative electrode active material including the silicon-based material, and is embedded in the silicon-based material, and the flake graphite may enhance the slippage of the silicon-based material in the negative electrode active layer in the technical process, so that the damage to the substrate is reduced.

For the condition of forming the flake graphite layer, the flake graphite layer forms a substrate protection layer between the substrate and the negative electrode active material including the silicon-based material, and the silicon-based material preferentially slides in the technical process and is partially or totally embedded into the flake graphite layer, so that the damage to the substrate is reduced. Without limitation, a structure of the negative electrode sheet is shown in FIG. 4, and includes a flake graphite layer 402 and a negative electrode active layer 403 which are laminated onto a surface of a substrate (negative electrode current collector) 401.

It could be understood that in the negative electrode sheet, regardless of the mixing or the flake graphite layer formation, the layer number of the negative electrode active layer may be one or more to meet the requirement of the energy density.

In some examples, the ratio t/d of the thickness t to the diameter d of the flake graphite is 0.005 to 0.4. Specifically, a value of t/d includes but is not limited to: 0.005, 0.01, 0.03, 0.05, 0.07, 0.1, 0.15, 0.2, 0.25, 0.3, 0.35, and 0.4. Further, a ratio t/d of the thickness t to the diameter d of the flake graphite is 0.1 to 0.4. The damage to the substrate caused by the silicon-based material may be further reduced by reasonably controlling the value of t/d.

In some examples, the flake graphite includes one or more of KS group graphite and SFG group graphite. It could be understood that the KS group graphite and the SFG group graphite may be purchased from TIMCAL TIMREX, Switzerland. Without limitation, a similar effect may also be achieved by using flake graphite similar to the KS group graphite and the SFG group graphite.

Specifically, the KS group graphite includes one or more kinds in KS-6, KS-10, and KS-16.

Specifically, the SFG group graphite includes one or more kinds in SFG-6, SFG-10, and SFG-15.

In some examples, a percentage of the flake graphite in a total mass of the negative electrode active material and the flake graphite is i (%), a compaction density of the negative electrode sheet is p (g/cm$^3$), a D90 particle size of the silicon-based material is n ($\mu$m), a gram capacity of the negative electrode active material is c (Ah/g), and i, p, n and c meet the following condition:

$$[p\times n\times(0.25-c)-100]\times i+c\times p\times n\leq 0.$$

In some examples, i, p, n and c meet the following conditions: $-70\leq[p\times n\times(0.25-c)-100]\times i+c\times p\times n\leq-0.01$.

In some examples, the percentage of the flake graphite in the total mass of the negative electrode active material and the flake graphite is i, and 0.3%≤i≤70%. Specifically, a value of i includes but is not limited to: 0.3%, 1%, 3%, 5%, 10%, 15%, 20%, 30%, 40%, 50%, 60%, and 70%. Further, 15%≤i≤70%. Under the condition of this range, when the negative electrode active material is entirely a silicon-based material, the damage to the substrate may be reduced.

In some examples, in the negative electrode active material, a mass percentage of the silicon-based material is q, and 20%≤q≤100%. Specifically, a value of q includes but is not limited to: 20%, 30%, 40%, 50%, 60%, 70%, 80%, 90%, and 100%.

Further, the silicon-based material includes a silicon-oxygen material, and 30%≤q≤100%.

Further, the silicon-based material includes a silicon-carbon material or a mixture of the silicon-carbon material and the silicon-oxygen material, and 20%≤q≤100%.

Without limitation, when the silicon-based material does not reach 100%, the negative electrode active material may further include a conventional negative electrode active material for a battery in the art. As an example, the negative electrode active material may include at least one of the following materials: artificial graphite, natural graphite, soft carbon, hard carbon, a tin-based material, lithium titanate, etc. The tin-based material may be at least one selected from elemental tin, a tin oxide compound, and tin alloy. However, the present application is not limited to such materials, and may also use other conventional materials capable of being used as negative electrode active materials for batteries.

In some examples, the negative electrode active material includes a silicon-based material or a combination of the silicon-based material and the graphite.

In some examples, the silicon-based material includes a silicon-oxygen material, a silicon-carbon material or a mixture of the silicon-carbon material and the silicon-oxygen material.

Further, the proportion of the flake graphite may be reasonably controlled by aiming at different addition conditions of the flake graphite and the types of the silicon-based materials, so that the damage to the substrate may be reduced, and moreover, the cost may be lowered.

In some examples, the flake graphite is disposed between the negative electrode current collector and the negative electrode active layer to form a flake graphite layer, and at least one of the following conditions is met:

(1) the silicon-based material includes a silicon-oxygen material, and 0.3%≤i≤70%; and
(2) the silicon-based material includes a silicon-carbon material or a mixture of the silicon-carbon material and the silicon-oxygen material, and 11.3%≤i≤70%.

It could be understood that compared with the silicon-oxygen material, the silicon-carbon material has higher hardness, and in a solution of separately forming the flake graphite layer, the consumption of the flake graphite may be properly increased.

In some examples, the flake graphite is mixed in the negative electrode active layer, and at least one of the following conditions is met:

(1) the silicon-based material includes a silicon-oxygen material, and 0.3%≤i≤70%; and
(2) the silicon-based material includes a silicon-carbon material or a mixture of the silicon-carbon material and the silicon-oxygen material, and 1%≤i≤70%.

It could be understood that compared with the silicon-oxygen material, the silicon-carbon material has higher hardness, and the consumption of the flake graphite may be properly increased. Moreover, compared with that in a solution of separately forming the flake graphite layer, the consumption in a direct mixing solution may be smaller.

Additionally, without limitation, the compaction density p of the negative electrode sheet is 0.1 $g/cm^3$ to 1.65 $g/cm^3$. Specifically, a value of p includes but is not limited to: 0.1 $g/cm^3$, 0.4 $g/cm^3$, 0.8 $g/cm^3$, 1 $g/cm^3$, 1.1 $g/cm^3$, 1.2 $g/cm^3$, 1.4 $g/cm^3$, 1.5 $g/cm^3$, and 1.65 $g/cm^3$.

Without limitation, the D90 particle size n of the silicon-based material is 3 $\mu$m to 24 $\mu$m. Specifically, a value of n includes but is not limited to: 3 $\mu$m, 4 $\mu$m, 8 $\mu$m, 10 $\mu$m, 12 $\mu$m, 16 $\mu$m, 18 $\mu$m, 21 $\mu$m, and 24 $\mu$m.

Without limitation, the gram capacity c of the negative electrode active material is 0.3 Ah/g to 1.8 Ah/g. Specifically, a value of c includes but is not limited to: 0.3 Ah/g, 0.35 Ah/g, 0.4 Ah/g, 0.45 Ah/g, 0.5 Ah/g, 0.55 Ah/g, 0.6 Ah/g, 0.65 Ah/g, 0.7 Ah/g, 0.75 Ah/g, 0.8 Ah/g, 0.85 Ah/g, 0.9 Ah/g, 0.95 Ah/g, 1 Ah/g, 1.1 Ah/g, 1.15 Ah/g, 1.2 Ah/g, 1.25 Ah/g, 1.3 Ah/g, 1.35 Ah/g, 1.5 Ah/g, 1.6 Ah/g, and 1.8 Ah/g.

In some examples, a composition of the layered graphite layer includes the flake graphite, a binder and a thickener. Further, optionally, a mass ratio of the flake graphite to the binder to the thickener is (2 to 80): 1: 1. Therefore, the layered graphite layer has good adhesiveness, and the structure of the electrode sheet is stable.

Without limitation, the types of the binder and the thickener may use the conventional types in the art. For example, the binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The thickener may include sodium carboxymethyl cellulose (CMC-Na), etc.

A priming coat may further be disposed between the negative electrode active layer and the negative electrode current collector. Without limitation, the material composition of the priming coat may include one or more of a conductive agent, a binder and a thickener.

Specifically, for the condition that the flake graphite is mixed in the negative electrode active layer, the arrangement of the priming coat may be performed according to a conventional method in the art.

Specifically, for the condition that the flake graphite is disposed between the negative electrode current collector and the negative electrode active layer to form the flake graphite layer:

on one hand, the priming coat may be additionally disposed between the flake graphite layer and the negative electrode current collector according to a conventional method in the art, for this condition, in some examples, in the flake graphite layer, a mass ratio of the flake graphite layer to the binder to the thickener is (60-80):(0.5-1.5):(0.5-1.5). Therefore, the flake graphite of a higher proportion may be used for further reducing the damage to the substrate caused by the silicon-based material.

On the other hand, the flake graphite layer may be directly used as the priming coat, that is, the negative electrode current collector is in direct contact with the flake graphite layer, no priming coat is additionally disposed between the negative electrode current collector and the flake graphite layer, and for this condition, in some examples, a mass ratio of the flake graphite to the binder to the thickener in the flake graphite layer is (2-10):(0.5-1.5):(0.5-1.5). Therefore, the damage to the substrate caused by the silicon-based material may be reduced, and the good adhesion to the current collector may also be achieved.

Without limitation, the negative electrode current collector may use a metal foil or a composite current collector. For example, a copper foil may be used as the metal foil. The composite current collector may include a polymer material substrate layer and a metal layer formed on at least one surface of a polymer material substrate. The composite current collector may be formed by forming a metal material on the polymer material substrate. The metal material includes but is not limited to stainless steel, copper, copper alloy, nickel, nickel alloy, titanium, titanium alloy, silver, silver alloy, etc., and the polymer material substrate includes but is not limited to substrates such as polypropylene (PP), polyethylene terephthalate (PET), polybutylene terephthalate (PBT), polystyrene (PS), and polyethylene (PE).

In some examples, the negative electrode current collector includes one of a copper foil, stainless steel, and a nickel foil.

Some examples of the present application further provide a method for preparing a negative electrode sheet. The method includes the following steps:

Flake graphite is mixed with a negative electrode active material to prepare negative electrode active slurry.

The negative electrode active slurry is coated onto a surface of a negative electrode current collector to form a negative electrode active layer.

A ratio of a thickness t to a diameter d of the flake graphite is t/d, and t/d≥0.005.

The negative electrode active material includes a silicon-based material.

Some examples of the present application further provide a method for preparing a negative electrode sheet. The method includes the following steps:

> flake graphite slurry is prepared, the flake graphite slurry is coated onto a surface of a negative electrode current collector to prepare a flake graphite layer, and the flake graphite layer includes the flake graphite;
> a negative electrode active layer is prepared on a surface of the flake graphite layer;
> a ratio of a thickness t to a diameter d of the flake graphite is t/d, and t/d≥0.005; and
> the negative electrode active material includes a silicon-based material.

It may be understood that the negative electrode sheet prepared by the preparation method has the corresponding technical solution and advantages as the above negative electrode sheet, and it is not repeated therein.

Some examples of the present application further provide a secondary battery including the negative electrode sheet. Further, the energy density of the secondary battery is 360 Wh/kg to 500 Wh/kg.

Some examples of the present application further provide an electric device including the secondary battery.

The secondary battery, a battery module, a battery pack, and the electric device of the present application will be described below by appropriately referring to the accompanying drawings.

An embodiment of the present application provides a secondary battery.

Generally, the secondary battery includes a positive electrode sheet, a negative electrode sheet, an electrolyte, and a separator. In a charging and discharging process of the battery, active ions are intercalated and deintercalated back and forth between the positive electrode sheet and the negative electrode sheet. The electrolyte enables ion conduction between the positive electrode sheet and the negative electrode sheet. The separator is disposed between the positive electrode sheet and the negative electrode sheet to mainly prevent short circuit between a positive electrode and a negative electrode and allowing ions to pass through moreover.

**Positive electrode sheet**

A positive electrode sheet includes a positive electrode current collector and a positive electrode film layer disposed on at least one surface of the positive electrode current collector. The positive electrode film layer includes a positive electrode active material according to the first aspect of the present application.

As an example, the positive electrode current collector has two opposite surfaces in its own thickness direction, and the positive electrode film layer is disposed on any one or both of the two opposite surfaces of the positive electrode current collector.

In some embodiments, the positive electrode current collector may use a metal foil or a composite current collector. For example, an aluminum foil may be used as the metal foil. The composite current collector may include a polymer material substrate layer and a metal layer formed on at least one surface of the polymer material substrate layer. The composite current collector may be formed by forming a metal material on the polymer material substrate. The metal material includes but is not limited to stainless steel, aluminum, aluminum alloy, nickel, nickel alloy, titanium, titanium alloy, silver, silver alloy, etc. The polymer material substrate (substrate such as polypropylene (PP), polyethylene terephthalate (PET), polybutylene terephthalate (PBT), polystyrene (PS), and polyethylene (PE)).

In some embodiments, the positive electrode active material may include a positive electrode active material used for a battery and well known in the art. As an example, the positive electrode active material may include at least one of the following materials: a lithium-containing phosphate of an olivine structure, a lithium transition metal oxide, and their respective modified compounds. However, the present application is not limited to such materials, and may also use other conventional materials capable of being used as positive electrode active materials for batteries. Only one or a combination of two or more of these positive electrode active materials may be used. The lithium transition metal oxide may exemplarily include but is not limited to at least one of a lithium-cobalt oxide (for example, $LiCoO_2$), a lithium-nickel oxide (for example, $LiNiO_2$), a lithium-manganese oxide (for example, $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (for example, $LiNi_{1/3}Co_{1/3}Mn_{1/3}O_2$ (may also be referred to as $NCM_{333}$ for short), $LiNi_{0.5}Co_{0.2}Mn_{0.3}O_2$ (may also be referred to as $NCM_{523}$ for short), $LiNi_{0.5}Co_{0.25}Mn_{0.25}O_2$ (may also be referred to as $NCM_{211}$ for short), $LiNi_{0.6}Co_{0.2}Mn_{0.2}O_2$ (may also be referred to as $NCM_{622}$ for short), $LiNi_{0.8}Co_{0.1}Mn_{0.1}O_2$ (may also be referred to as $NCM_{811}$ for short), a lithium-nickel-cobalt-aluminum oxide (for example, $LiNi_{0.85}Co_{0.15}Al_{0.05}O_2$) and their modified compounds, etc. The lithium-containing phosphate of the olivine structure may exemplarily include but is not limited to at least one of a lithium iron phosphate (for example, $LiFePO_4$ (may also be referred to as LFP for short)), a composite material of the lithium iron phosphate and carbon, a lithium manganese phosphate (for example, $LiMnPO_4$), a composite material of the lithium manganese phosphate and carbon, a lithium iron manganese phosphate, and a composite material of the lithium manganese iron phosphate and carbon. The weight ratio of the positive electrode active material in the positive electrode film layer is 80 wt% to 100 wt% through being metered based on the total weight of the positive electrode film layer.

In some embodiments, the positive electrode active material includes $LiNi_xCo_yMn_zO_2$, x is 0.90 to 0.99, y is 0.01 to 0.1, and z is 0.01 to 0.1.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylic resin. The weight ratio of the binder in the positive electrode film layer is 0 wt% to 20 wt% through being metered based on the total weight of the positive electrode film layer.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers. The weight ratio of the conductive agent in the positive electrode film layer is 0 wt% to 20 wt% through being metered based on the total weight of the positive electrode film layer.

In some embodiments, the positive electrode sheet may be prepared by the following manner. The above components for preparing the positive electrode sheet, for example, the positive electrode active material, the conductive agent, the binder, and any other components, are dispersed in a solvent (for example, N-methylpyrrolidone) to form positive electrode slurry. The solid content of the positive electrode slurry is 40 wt% to 80 wt%. The viscosity at the room temperature is adjusted to 5000 mPa·s to 25000 mPa·s. The positive electrode slurry is coated onto the surface of the positive electrode current collector. Cold pressing is performed by using a cold rolling mill after oven drying to obtain the positive electrode sheet. The coating unit areal density of the positive electrode powder is 150 mg/m$^2$ to 350 mg/m$^2$, the compaction density of the positive electrode sheet is 3.0 g/cm$^3$ to 3.6 g/cm$^3$, and the compaction density of the positive electrode sheet is optionally 3.3 g/cm$^3$ to 3.5 g/cm$^3$. A calculation formula of the compaction density is as follows: compaction density = coating areal density/(the thickness of the electrode sheet after pressing - the thickness of the current collector).

**Negative electrode sheet**

As mentioned above, the negative electrode sheet includes a negative electrode current collector, a negative electrode active layer and flake graphite.

As an example, the negative electrode current collector has two opposite surfaces in its own thickness direction, and the negative electrode active layer is disposed on any one or both of the two opposite surfaces of the negative electrode current collector.

In some embodiments, the negative electrode active layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode active layer is 0 wt% to 30 wt% through being metered based on the total weight of the negative electrode active layer.

In some embodiments, the negative electrode active layer further optionally includes a conductive agent. The conductive agent may be selected from at least one of superconducting carbon, acetylene black, carbon black, Ketjen black, carbon dots, carbon nanotubes, graphene, and carbon nanofibers. The weight ratio of the conductive agent in the negative electrode active layer is 0 wt% to 20 wt% through being metered based on the total weight of the negative electrode active layer.

In some embodiments, the negative electrode active layer further optionally includes another adjuvant such as a thickener (for example, sodium carboxymethyl cellulose (CMC-Na)). The weight ratio of the mentioned another adjuvant in the negative electrode film layer is 0 wt% to 15 wt% through being metered based on the total weight of the negative electrode active layer.

**Electrolyte**

The electrolyte enables ion conduction between the positive electrode sheet and the negative electrode sheet. The type of the electrolyte is not specifically limited in the present application, and it may be selected according to requirements. For example, the electrolyte may be liquid, gelled, or all solid.

In some embodiments, the electrolyte uses an electrolyte solution. The electrolyte solution includes an electrolyte salt and a solvent.

In some embodiments, the electrolyte salt may be one or more selected from lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethanesulfonyl)imide (LiTFSI), lithium triflate (LiTFS), lithium difluoro(oxalato)borate (LiDFOB), lithium bis(oxalato)borate (LiBOB), lithium difluorophosphate (LiPO$_2$F$_2$), lithium difluoro bis(oxalato)phosphate (LiDFOP), and lithium tetrafluoro(oxalato)phosphate (LiTFOP). The concentration of the electrolyte salt is generally 0.5 mol/L to 5 mol/L.

In some embodiments, the solvent may be one or more selected from fluoroethylene carbonate (FEC), ethylene carbonate (EC), propylidene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution optionally includes an additive. For example, the additive may include a negative electrode film-forming additive and a positive electrode film-forming additive, and may further include an additive capable of improving some properties of the battery, for example, an additive capable of improving the overcharging property of the battery, an additive capable of improving the high-temperature or low-temperature property of the battery, etc.

**Separator**

In some embodiments, the secondary battery further includes a separator. The type of the separator is not particularly limited in the present application, and any well-known separator of a porous structure having good chemical stability and mechanical stability may be selected and used.

In some embodiments, a material of the separator may be at least one selected from glass fiber, non-woven fabric, polyethylene, polypropylene, or polyvinylidene fluoride. The separator may be a single-layer film or a multilayer composite film without particular limitation. In a case that the separator is a multilayer composite film, materials of each layer may be the same or different without particular limitation.

In some embodiments, the thickness of the separator is 6 $\mu$m to 40 $\mu$m, and is optionally 12 $\mu$m to 20 $\mu$m.

In some embodiments, the positive electrode sheet, the negative electrode sheet, and the separator may be made into an electrode assembly by a winding process or a lamination process.

In some embodiments, the secondary battery may include an outer packaging. The outer packaging may be used for encapsulating the electrode assembly and electrolyte.

In some embodiments, the outer packaging of the secondary battery may be a hard shell, such as a hard plastic shell, an aluminum shell, and a steel shell. The outer packaging of the secondary battery may also be a soft packaging, such as a bag type soft packaging. A material of the soft packaging may be plastics, and examples of the plastics may include polypropylene, polybutylene terephthalate, polybutylene succinate, etc.

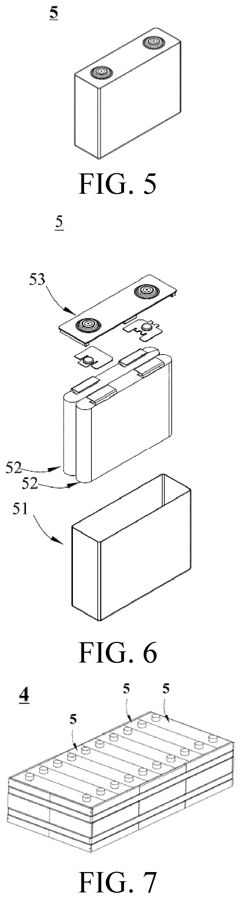

A shape of the secondary battery is not particularly limited in the present application, and the secondary battery may be in a cylindrical shape, a square shape, or any other shape. For example, FIG. 5 shows a secondary battery 5 of a square structure as an example.

In some embodiments, referring to FIG. 6, the outer packaging may include a case 51 and a cover plate 53. The case 51 may include a bottom plate and a side plate connected to the bottom plate, and an accommodating cavity is enclosed by the bottom plate and the side plate. The case 51 is provided an opening communicating with the accommodating cavity, and the cover plate 53 may cover the opening to close the accommodating cavity. The positive electrode sheet, the negative electrode sheet, and the separator may be made to form an electrode assembly 52 by a winding process or a lamination process. The electrode assembly 52 is encapsulated in the accommodating cavity. An electrolyte solution infiltrates into the electrode assembly 52. The quantity of electrode assembly 52 included in the secondary battery 5 may be one or more, and it may be selected by those skilled in the art according to specific practical requirements.

In some embodiments, the secondary battery may be assembled into a battery module. The quantity of the secondary battery included by the battery module may be one or more, and the specific quantity may be selected by those skilled in the art according to the application and capacity of the battery module.

FIG. 7 shows a battery module 4 as an example. Referring to FIG. 7, in the battery module 4, multiple secondary batteries 5 may be sequentially arranged in a length direction of the battery module 4. Of course, the secondary batteries may also be arranged in any other manners. The multiple secondary batteries 5 may further be fixed through a fastener.

Optionally, the battery module 4 may further include a shell with an accommodating space, and the multiple secondary batteries 5 may be accumulated in the accommodating space.

In some embodiments, the battery module may further be assembled into a battery pack, the quantity of battery modules included in the battery pack may be one or more, and the specific quantity may be selected by those skilled in the art according to the application and capacity of the battery pack.

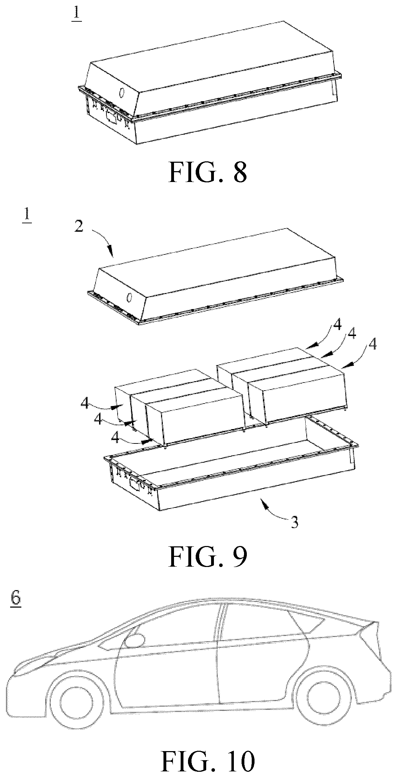

FIG. 8 and FIG. 9 show a battery pack 1 as an example. Referring to FIG. 8 and FIG. 9, the battery pack 1 may include a battery box and multiple battery modules 4 disposed in the battery box. The battery box includes an upper box body 2 and a lower box body 3. The upper box body 2 may cover the lower box body 3 to form a closed space for accommodating the battery modules 4. The multiple battery modules 4 may be arranged in the battery box in any manner.

In addition, the present application further provides an electric device. The electric device includes at least one of the secondary battery, the battery module, or the battery pack provided in the present application. The secondary battery, the battery module, or the battery pack may be used as a power source of the electric device, and may also be used as an energy storage unit of the electric device. The electric device may include but is not limited to a mobile device (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

The secondary battery, the battery module, or the battery pack may be selected according to use requirements of the electric device.

FIG. 10 shows an electric device as an example. The electric device is an all-electric vehicle, a hybrid electric vehicle, or a plug-in hybrid electric vehicle, etc. In order to meet the requirements of the electric device on high power and high energy density of the secondary battery, the battery pack or the battery module may be used.

The device as another example may be a mobile phone, a tablet computer, a laptop, etc. The device generally requires high weight and thin appearance, and the secondary battery may be used as a power source.

Example

In order that the technical problems to be solved and the technical solutions and beneficial effects of the present application will become more apparent, the present application will be further described in detail with reference to examples and accompanying drawings hereafter. It is clear that the described examples are a part of the examples of the present application, rather than all of the examples. The following descriptions of at least one exemplary example are actually merely illustrative, and are not intended to limit the present application and application thereof. All other examples obtained by a person of ordinary skill in the art based on examples of the present application without creative efforts shall fall within the protection scope of the present application.

If the specific technology or conditions are not specified in the examples, the technology or conditions described in the literature in the art or the product specification shall be followed. The used reagents or instruments without manufacturer indicated are all conventional products that may be purchased in the market.

**Example 1-1**

1) Preparation of positive electrode sheet

A nickel-cobalt-manganese (NCM) ternary material ($LiNi_{0.94}Co_{0.03}Mn_{0.03}O_2$), a carbon black conductive agent, and a polyvinylidene fluoride (PVDF) binder were dispersed into a N-methylpyrrolidone solvent according to a mass ratio of 97%: 1%: 2% to be mixed and stirred for 3 h to obtain positive electrode slurry. The positive electrode slurry was uniformly coated onto an aluminum foil of a positive electrode current collector, oven drying and cold pressing were performed to obtain a positive electrode sheet, and the coating amount in a unit area was 0.27 g/1540.25 $mm^2$.

2) Preparation of negative electrode sheet

Preparation of priming coat: conductive carbon, a styrene-butadiene rubber (SBR) binder, a hydroxymethyl cellulose sodium (CMC) thickener were added into deionized water according to a weight ratio of 2: 1: 1 and were mixed and stirred for 3 h to obtain priming coat slurry, the priming coat slurry was coated onto a copper foil of a negative electrode current collector in an intaglio form, and was oven dried to form a priming coat, and the coating amount was about 2 mg/1540.25 $mm^2$.

Flake graphite (t/d=0.2, KS-10, purchased from TIMCAL TIMREX, Switzerland), a styrene-butadiene rubber (SBR) binder, and a hydroxymethyl cellulose sodium (CMC) thickener were added into deionized water according to a weight ratio of 97.5%: 1.25%: 1.25% (78:1:1), and were mixed and stirred for 3 h to obtain negative electrode slurry (1).

A silicon-oxygen material, a carbon black conductive agent, a styrene-butadiene rubber (SBR) binder, a hydroxymethyl cellulose sodium (CMC) thickener were added into deionized water according to a weight ratio of 97%: 0.5%: 1.25%: 1.25% (the proportion q of a silicon-based material in a negative electrode active material was 100%), and were mixed and stirred for 3 h to obtain negative electrode slurry (2).

The negative electrode slurry (1) was coated onto the priming coat, and was oven dried, the coating amount was 0.051 g/1540.25 $mm^2$, and a flake graphite layer was formed. Then, the negative electrode slurry (2) was coated onto the flake graphite layer and was oven dried, the coating amount was 0.119 g/1540.25 $mm^2$, then, cold pressing and slitting were performed to obtain the negative electrode sheet, and the coating amount at a unit area was 0.17 g/1540.25 $mm^2$.

In the negative electrode sheet:

the percentage i (%) of the flake graphite in the total mass of the negative electrode active material (the silicon-oxygen material) and the flake graphite met i (%)=97.5*0.051/(97*0.119+97.5*0.051)=30%;

the compaction density p of the negative electrode sheet met p=1.5 g/cm³;

the D90 particle size n of the silicon-oxygen material met n=16 μm;

the gram capacity c of the negative electrode active material met c=0.9773 Ah/g; and

through calculation, the following formula was met: $[p \times n \times (0.25-c)-100] \times i + c \times p \times n = -11.78$.

3) Separator

A polypropylene separator with the thickness being 12 μm was selected.

4) Preparation of electrolyte solution

An organic solvent was prepared by mixing ethylene carbonate, ethyl methyl carbonate and diethyl carbonate according to a volume ratio of 1: 1: 1. In an argon atmosphere glove box with the moisture content lower than 10 ppm, sufficiently dried lithium salt LiPF6 was dissolved into the organic solvent, and uniform mixing was performed to obtain the electrolyte solution. The concentration of the lithium salt was 1 mol/L.

5) Preparation of battery

The positive electrode sheet, the separator and the negative electrode sheet were sequentially laminated, so that the separator was located between the positive electrode sheet and the negative electrode sheet to achieve a separation effect, then, the whole was wound into a square bare battery cell to be charged into an aluminum-plastic film, then, baking was performed at 80°C for water removal, 10 g of corresponding nonaqueous electrolyte solution was filled, opening sealing was performed, and a finished product battery with the capacity being 4000 mAh was obtained after working procedures of still standing, hot and cold pressing, chemical formation, clamping, capacity grading, etc.

The battery preparation methods of Examples 1-2 to 1-25 and Comparative examples 1 to 2 were the same as those of Example 1-1, and the main difference was that the t/d value and the type of the flake graphite, the mass percentage of the flake graphite in the negative electrode active material, the proportion q of the silicon-based material in the negative electrode active material, the type of the silicon-based material were different. Details were shown in Table 2.

**Example 2-1**

1) Preparation of positive electrode sheet

The same as Example 1.

2) Preparation of negative electrode sheet

Flake graphite (t/d=0.2, KS-10, purchased from TIMCAL TIMREX, Switzerland), a styrene-butadiene rubber (SBR) binder, and a hydroxymethyl cellulose sodium (CMC) thickener were added into deionized water according to a weight ratio of 2: 1: 1, and were mixed and stirred for 3 h to obtain priming coat slurry, the priming coat slurry was coated onto a copper foil of a negative electrode current collector in an intaglio form to form a priming coat (flake graphite layer), and the weight was about 2 mg/1540.25 mm².

A silicon-oxygen material, artificial graphite, a carbon black conductive agent, a styrene-butadiene rubber (SBR) binder, a hydroxymethyl cellulose sodium (CMC) thickener were added into deionized water according to a weight ratio of 67.9%: 29.1%: 0.5%: 1.25%: 1.25% (the proportion q of a silicon-based material in a negative electrode active material was 30%), and were mixed and stirred for 3 h to obtain negative electrode slurry. The negative electrode slurry was coated onto the priming coat and was oven dried. Then, cold pressing and slitting were performed to obtain a negative electrode sheet, and the coating amount in a unit area was 0.17 g/1540.25 mm².

In the negative electrode sheet:

the percentage i (%) of the flake graphite in the total mass of the negative electrode active material (the silicon-oxygen material and the artificial graphite) and the flake graphite met i(%)=50*0.002/(97*0.17+50*0.002)=0.6%;

the compaction density p of the negative electrode sheet met p=0.4 g/cm³;

the D90 particle size n of the silicon-oxygen material met n=4 μm;

the gram capacity c of the negative electrode active material met c=0.334 Ah/g; and

through calculation, the following formula was met: $[p \times n \times (0.25-c)-100] \times i + c \times p \times n = -0.07$.

3) Separator

The same as Example 1.

4) Preparation of electrolyte solution

The same as Example 1.

5) Preparation of battery

The same as Example 1.

### Example 3-1

1) Preparation of positive electrode sheet

The same as Example 1.

2) Preparation of negative electrode sheet

A silicon-carbon material, artificial graphite, flake graphite (t/d=0.2, KS-10, purchased from TIMCAL TIMREX, Switzerland), a carbon black conductive agent, a styrene-butadiene rubber (SBR) binder, and a hydroxymethyl cellulose sodium (CMC) thickener were added into deionized water according to a weight ratio of 57.4%: 24.6%: 15%: 0.5%: 1.25%: 1.25% (the proportion q of a silicon-based material in a negative electrode active material met q=70%), and were mixed and stirred for 3 h to obtain negative electrode slurry. The negative electrode slurry was coated onto a copper foil of a negative electrode current collector and was oven dried, then, cold pressing and slitting were performed to obtain a negative electrode sheet, and the coating amount in a unit area was 0.17 g/1540.25 $mm^2$.
In the negative electrode sheet:

the percentage i (%) of the flake graphite in the total mass of the negative electrode active material (the silicon-carbon material and the artificial graphite) and the flake graphite met i(%)=15/(57.4+24.6+15)=15.5%;
the compaction density p of the negative electrode sheet met p=1.2 $g/cm^3$;
the D90 particle size n of the silicon-oxygen material met n=21 $\mu$m;
the gram capacity c of the negative electrode active material met c=0.5672 Ah/g; and
through calculation, the following formula was met: $[p \times n \times (0.25-c)-100] \times i+c \times p \times n=-2.45$.

3) Separator

The same as Example 1.

4) Preparation of electrolyte solution

The same as Example 1.

5) Preparation of battery

The same as Example 1.
A method for preparing a battery in Example 3-2 was the same as that in Example 3-1, and the main difference was that the mass percentage i of the flake graphite in the negative electrode active material was different. Details were shown in Table 2.

### Test example

Cross section of the electrode sheet were photographed by using a scanning electron microscope, supposed that the thickness of the substrate was a (um), (1) a result that the thickness of the substrate in the view was uniform and was a ±0.5%*a was judged as no damage; (2) a result that there were particles in the view of the substrate to compress or cut the substrate to the thickness >85%*a was judged as partial damage; and (3) a result that there were particles in the view of the substrate to compress or cut the substrate to the thickness <85%*a was judged as serious damage.

Test results were shown in Table 2 below.

Table 2

| Example | Flake graphite | | Formula | | | | | Silicon-based material | | Substrate damage |
| | t/d | Type | i | p | n | c | Calculation result | Type | Percentage q of silicon-based material | / |
|---|---|---|---|---|---|---|---|---|---|---|
| 1-1 | **0.2** | KS-10 | 30% | 1.5 | 16 | 0.9773 | -11.78 | Silicon-oxygen material | 100% | No damage |
| 1-2 | **0.005** | KS-10 | 30% | 1.5 | 16 | 0.9773 | -11.78 | Silicon-oxygen material | 100% | Slight damage |
| 1-3 | **0.01** | KS-10 | 30% | 1.5 | 16 | 0.9773 | -11.78 | Silicon-oxygen material | 100% | Slight damage |
| 1-4 | **0.05** | KS-10 | 30% | 1.5 | 16 | 0.9773 | -11.78 | Silicon-oxygen material | 100% | Slight damage |
| 1-5 | **0.1** | KS-10 | 30% | 1.5 | 16 | 0.9773 | -11.78 | Silicon-oxygen material | 100% | No damage |
| 1-6 | **0.3** | KS-10 | 30% | 1.5 | 16 | 0.9773 | -11.78 | Silicon-oxygen material | 100% | No damage |
| 1-7 | **0.4** | KS-10 | 30% | 1.5 | 16 | 0.9773 | -11.78 | Silicon-oxygen material | 100% | No damage |
| 1-8 | 0.2 | **KS-6** | 30% | 1.5 | 16 | 0.9773 | -11.78 | Silicon-oxygen material | 100% | No damage |
| 1-9 | 0.2 | **KS-16** | 30% | 1.5 | 16 | 0.9773 | -11.78 | Silicon-oxygen material | 100% | No damage |
| 1-10 | 0.2 | **SFG-6** | 30% | 1.5 | 16 | 0.9773 | -11.78 | Silicon-oxygen material | 100% | No damage |
| 1-11 | 0.2 | **SFG-10** | 30% | 1.5 | 16 | 0.9773 | -11.78 | Silicon-oxygen material | 100% | No damage |
| 1-12 | 0.2 | **SFG-15** | 30% | 1.5 | 16 | 0.9773 | -11.78 | Silicon-oxygen material | 100% | No damage |
| 1-13 | 0.2 | KS-10 | **0.3%** | 0.1 | 8 | 0.3445 | -0.02 | Silicon-oxygen material | 30% (the balance being artificial graphite) | Slight damage |
| 1-14 | 0.2 | KS-10 | **5%** | 1 | 8 | 0.3456 | -2.27 | Silicon-oxygen material | 30% (the balance being artificial graphite) | Slight damage |

| Example | Flake graphite | | Formula | | | | | Silicon-based material | | Substrate damage |
|---|---|---|---|---|---|---|---|---|---|---|
| | t/d | Type | i | p | n | c | Calculation result | Type | Percentage q of silicon-based material | / |
| 1-15 | 0.2 | KS-10 | **15%** | 1.65 | 8 | 1.11065 | -2.04 | Silicon-oxygen material | 100% | No damage |
| 1-16 | 0.2 | KS-10 | **30%** | 1.65 | 8 | 0.9773 | -19.98 | Silicon-oxygen material | 100% | No damage |
| 1-17 | 0.2 | KS-10 | **50%** | 1.65 | 8 | 0.8632 | -42.65 | Silicon-oxygen material | 100% | No damage |
| 1-18 | 0.2 | KS-10 | **60%** | 1.65 | 8 | 0.7106 | -54.27 | Silicon-oxygen material | 100% | No damage |
| 1-19 | 0.2 | KS-10 | **70%** | 1.65 | 8 | 0.6217 | -65.23 | Silicon-oxygen material | 100% | No damage |
| 1-20 | 0.2 | KS-10 | 30% | 1.5 | 16 | 0.33 | -22.66 | Silicon-oxygen material | **80% (the balance being artificial graphite)** | No damage |
| 1-21 | 0.2 | KS-10 | 30% | 1.5 | 16 | 0.356 | -22.22 | Silicon-oxygen material | **60% (the balance being artificial graphite)** | No damage |
| 1-22 | 0.2 | KS-10 | 30% | 1.5 | 16 | 0.467 | -20.35 | Silicon-oxygen material | **40% (the balance being artificial graphite)** | No damage |
| 1-23 | 0.2 | KS-10 | 30% | 1.5 | 16 | 0.4566 | -20.53 | Silicon-oxygen material | **30% (the balance being artificial graphite)** | No damage |
| 1-24 | 0.2 | KS-10 | 30% | 1.4 | 21 | 1.310267 | -0.83 | **Silicon-carbon material** | 100% | Slight damage |
| 1-25 | 0.2 | KS-10 | **11.3%** | 1.1 | 21 | 0.4922 | -0.56 | **Silicon-carbon material** | 40% (the balance being artificial graphite) | Slight damage |
| 2-1 | 0.2 | KS-10 | 0.6% | 0.4 | 4 | 0.334 | -0.07 | Silicon-oxygen material | 30% (the balance being artificial graphite) | Slight damage |
| 3-1 | 0.2 | KS-10 | 15.5% | 1.2 | 21 | 0.5672 | -2.45 | Silicon-carbon material | 70% (the balance being artificial graphite) | No damage |
| 3-2 | 0.2 | KS-10 | 1.0% | 0.4 | 3 | 0.657 | -0.22 | Silicon-carbon material | 70% (the balance being artificial graphite) | Slight damage |

| Example | Flake graphite | | Formula | | | | | Silicon-based material | | Substrate damage |
| | t/d | Type | i | p | n | c | Calculation result | Type | Percentage q of silicon-based material | / |
|---|---|---|---|---|---|---|---|---|---|---|
| Comparative Example 1 | **0.001** | KS-10 | 30% | 1.4 | 21 | 1.310267 | -0.83 | **Silicon-carbon material** | 100% | Serious damage |
| Comparative Example 2 | **0.001** | KS-10 | 30% | 1.5 | 16 | 0.9773 | -11.78 | Silicon-oxygen material | 100% | Serious damage |

Through comparison among the examples and the comparative examples, it could be known that the examples of the present application may reduce the damage to the substrate caused by the silicon-based material.

Further, through comparison among Examples 1-1 to 1-7, it could be known that the damage to the substrate caused by the silicon-based material may be further reduced by reasonably controlling the value of t/d.

Through comparison among Example 1-1 and examples to 1-8 to 1-12, it could be known that the damage to the substrate caused by the silicon-based material may be effectively reduced by using different types of the flake graphite.

Through comparison among Example 1-1 and Examples 1-13 to 1-19, it could be known that the protection effect on the substrate may be further improved by reasonably controlling the value of i, and the damage to the substrate may be reduced under the condition that the negative electrode active material is entirely the silicon-based material.

Through comparison among Example 1-1 and Examples 1-20 to 1-23, it could be known that the damage to the substrate caused by the silicon-based material may be effectively reduced by adopting different proportions of the silicon-based material.

Through comparison among Example 1-1 and Examples 1-24 to 1-25, it could be known that even for the silicon-carbon material with the higher hardness than the silicon-oxygen material, the damage to the substrate caused by the silicon-based material may still be reduced to a certain degree.

Through comparison among Example 1-1, Example 2-1, Example 3-1, and Example 3-2, it could be known that the damage to the substrate caused by the silicon-based material may be reduced to a certain degree by disposing the flake graphite in different positions in the negative electrode, for example, by directly mixing the flake graphite into the negative electrode active layer, or singly forming an active layer, or mixing the flake graphite with the priming coat.

It should be noted that the present application is not limited to the above embodiments. The above embodiments are merely exemplary, and the embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the present application are also included in the scope of the present application.

**Claims**

1. A negative electrode sheet, comprising a negative electrode current collector, a negative electrode active layer and a flake graphite, wherein the negative electrode active layer comprises a negative electrode active material, the negative electrode active material comprises a silicon-based material, the negative electrode active layer is disposed on a surface of the negative electrode current collector, a ratio of a thickness t to a diameter d of the flake graphite is t/d, t/d≥0.005, and a distribution position of the flake graphite in the negative electrode sheet meets at least one of the following conditions (1) to (2):

    (1) the flake graphite is mixed in the negative electrode active layer; and
    (2) a flake graphite layer is formed between the negative electrode current collector and the negative electrode active layer.

2. The negative electrode sheet according to claim 1, wherein the ratio t/d of the thickness t to the diameter d of the flake graphite is 0.005 to 0.4, and optionally, t/d is 0.1 to 0.4.

3. The negative electrode sheet according to any one of claims 1 to 2, wherein a percentage of the flake graphite in a total mass of the negative electrode active material and the flake graphite is i (%), a compaction density of the negative electrode sheet is p (g/cm$^3$), a D90 particle size of the silicon-based material is n ($\mu$m), a gram capacity of the negative electrode active material is c (Ah/g), and i, p, n and c meet the following condition:

$$[p \times n \times (0.25 - c) - 100] \times i + c \times p \times n \leq 0.$$

4. The negative electrode sheet according to claim 3, wherein i, p, n and c meet the following condition:

$$-70 \leq [p \times n \times (0.25 - c) - 100] \times i + c \times p \times n \leq -0.01.$$

5. The negative electrode sheet according to any one of claims 1 to 4, wherein the percentage of the flake graphite in the total mass of the negative electrode active material and the flake graphite is i, and 0.3%≤i≤70%; and optionally, 15%≤i≤70%.

6. The negative electrode sheet according to any one of claims 1 to 5, wherein in the negative electrode active material, a mass percentage of the silicon-based material is q, and 20% ≤ q ≤ 100%;

   optionally, the silicon-based material comprises a silicon-oxygen material, and 30%≤q≤100%; and
   optionally, the silicon-based material comprises a silicon-carbon material or a mixture of the silicon-carbon material and the silicon-oxygen material, and 20%≤q≤100%.

7. The negative electrode sheet according to any one of claims 1 to 6, wherein the flake graphite is disposed between the negative electrode current collector and the negative electrode active layer to form a flake graphite layer, and at least one of the following conditions is met:

   (1) the silicon-based material comprises a silicon-oxygen material, and 0.3%≤i≤70%; and
   (2) the silicon-based material comprises a silicon-carbon material or a mixture of the silicon-carbon material and the silicon-oxygen material, and 11.3%≤i≤70%.

8. The negative electrode sheet according to claim 6, wherein the flake graphite is mixed in the negative electrode active layer, and at least one of the following conditions is met:

   (1) the silicon-based material comprises a silicon-oxygen material, and 0.3%≤i≤70%; and
   (2) the silicon-based material comprises a silicon-carbon material or a mixture of the silicon-carbon material and the silicon-oxygen material, and 1%≤i≤70%.

9. The negative electrode sheet according to any one of claims 1 to 8, wherein a composition of the flake graphite layer comprises the flake graphite, a binder and a thickener.

10. The negative electrode sheet according to claim 9, wherein a priming coat is disposed between the negative electrode current collector and the flake graphite layer; and optionally, a mass ratio of the flake graphite to the binder to the thickener is (60-80):(0.5-1.5):(0.5-1.5).

11. The negative electrode sheet according to claim 9, wherein the negative electrode current collector is in direct contact with the flake graphite layer; and optionally, a mass ratio of the flake graphite to the binder to the thickener is (2-10):(0.5-1.5):(0.5-1.5).

12. A method for preparing a negative electrode sheet, comprising at least one of the following steps (1) to (2):

    (1) mixing flake graphite with a negative electrode active material to prepare negative electrode active slurry, and coating the negative electrode active slurry onto a surface of a negative electrode current collector to form a negative electrode active layer; and
    (2) preparing flake graphite slurry, coating the flake graphite slurry onto the surface of the negative electrode current collector to prepare a flake graphite layer comprising the flake graphite, and preparing a negative electrode active layer on a surface of the flake graphite layer, wherein

    in step (1) to step (2), the ratio of the thickness t to the diameter d of the flake graphite is t/d, and t/d≥0.005; and the negative electrode active material comprises a silicon-based material.

13. The method for preparing a negative electrode sheet according to claim 12, wherein the ratio t/d of the thickness t to the diameter d of the flake graphite is 0.005 to 0.4, and optionally, t/d is 0.1 to 0.4.

14. A secondary battery, comprising the negative electrode sheet according to any one of claims 1 to 11 or the negative electrode sheet prepared by the preparation method according to any one of claims 12 to 13.

15. An electric device, comprising the secondary battery according to claim 14.

FIG. 1

FIG. 2

FIG. 3

FIG. 4

<u>5</u>

FIG. 5

<u>5</u>

FIG. 6

<u>4</u>

FIG. 7

FIG. 8

FIG. 9

FIG. 10

## INTERNATIONAL SEARCH REPORT

| International application No. |
|---|
| **PCT/CN2023/089199** |

### A. CLASSIFICATION OF SUBJECT MATTER

H01M 4/134(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 负极, 硅基材料, 片状石墨, 厚度, 片径, 径厚比, 压实密度, 粒径, battery, negative electrode, silicon-based material, sheet-shaped, graphite, thickness, radius, radius-thickness ratio, compaction density, grain size

### C. DOCUMENTS CONSIDERED TO BE RELEVANT

| Category* | Citation of document, with indication, where appropriate, of the relevant passages | Relevant to claim No. |
|---|---|---|
| X | CN 111554903 A (NINGDE AMPEREX TECHNOLOGY LTD.) 18 August 2020 (2020-08-18) <br> description, paragraphs [0024]-[0087], and figures 1-4 | 1-15 |
| Y | CN 111554903 A (NINGDE AMPEREX TECHNOLOGY LTD.) 18 August 2020 (2020-08-18) <br> description, paragraphs [0024]-[0087], and figures 1-4 | 1-15 |
| Y | CN 113764625 A (SVOLT ENERGY TECHNOLOGY CO., LTD.) 07 December 2021 (2021-12-07) <br> description, paragraphs [0003]-[0067] | 1-15 |
| A | CN 101295781 A (SAMSUNG SDI CO., LTD.) 29 October 2008 (2008-10-29) <br> entire document | 1-15 |
| A | CN 216413113 U (XIAMEN HAICHEN NEW ENERGY TECHNOLOGY CO., LTD.) 29 April 2022 (2022-04-29) <br> entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2023** | **23 June 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/089199** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2017133682 A1 (LG CHEM, LTD.) 11 May 2017 (2017-05-11)<br>        entire document | 1-15 |

Form PCT/ISA/210 (second sheet) (July 2022)

## INTERNATIONAL SEARCH REPORT
### Information on patent family members

International application No.

**PCT/CN2023/089199**

| Patent document cited in search report | | | Publication date (day/month/year) | Patent family member(s) | | | Publication date (day/month/year) |
|---|---|---|---|---|---|---|---|
| CN | 111554903 | A | 18 August 2020 | WO | 2021226842 | A1 | 18 November 2021 |
| CN | 113764625 | A | 07 December 2021 | None | | | |
| CN | 101295781 | A | 29 October 2008 | KR | 20080095425 | A | 29 October 2008 |
| | | | | KR | 100869806 | B1 | 21 November 2008 |
| | | | | US | 2008268338 | A1 | 30 October 2008 |
| | | | | US | 8349492 | B2 | 08 January 2013 |
| | | | | CN | 101295781 | B | 11 August 2010 |
| CN | 216413113 | U | 29 April 2022 | None | | | |
| US | 2017133682 | A1 | 11 May 2017 | US | 10056613 | B2 | 21 August 2018 |
| | | | | KR | 20170053123 | A | 15 May 2017 |
| | | | | KR | 102080255 | B1 | 21 February 2020 |

Form PCT/ISA/210 (patent family annex) (July 2022)